# EUROPEAN PATENT APPLICATION

(11) **EP 4 550 557 A1**
(43) Date of publication of application: **07.05.2025**
(21) Application number: 24174510.8
(22) Date of filing: 07.05.2024
(51) Int. Cl.: H01M 50/35, H01M 50/204, H01M 50/358

(54) **BATTERY MODULE AND ENERGY STORAGE SYSTEM**

(30) Priority: 02.11.2023 KR 20230149940
(71) Applicant: Samsung SDI Co., Ltd., Yongin-si, Gyeonggi-do 17084 (KR)
(72) Inventor: Lee, Joo Yul, 16678 Suwon-si, Gyeonggi-do (KR)
(74) Representative: Gulde & Partner

(57) **Abstract**

Aspects of the present invention relate to a battery module (100A, 100B, 100C, 1000, 200) and an energy storage system including the same, the battery module (100A, 100B, 100C, 1000, 200) including: a plurality of battery cells (101) each including a cell vent (120) open in a second direction intersecting a first direction; and a module case (140A, 140B, 140C, 140D, 210) receiving the plurality of battery cells (101) therein and formed with a plurality of module vents (152, 225) each facing one of the plurality of cell vents (120).

## Description

### Field of the Invention

The present invention relates to a battery module and an energy storage system.

### Description of the Related Art

In general, an energy storage system (ESS) is a device that may store surplus electricity or store electricity generated using renewable energy. The energy storage system may be constructed by installing a plurality of battery modules in a rack and holding a plurality of racks in a container.

In the energy storage system, each of the battery modules may include a plurality of electrically interconnected battery cells, wherein the plurality of battery cells may be arranged in a single layer with respective cell vents thereof facing upwards. Here, the battery module may include a module vent open in an upward direction of the battery module to discharge emissions generated due to overheating or the like, such as a hot gas and flaming debris, from the battery module.

Layers of the rack may be arranged with a sufficient height difference therebetween in order to prevent spread of fire to upper layers due to hot gases and flaming debris discharged through the module vent. This may reduce the degree of spatial integration of the battery cells in the energy storage system, causing reduction in energy density of the energy storage system.

The above information disclosed in this Background section is provided for enhancement of understanding of the background of the present disclosure, and, therefore, it may contain information that does not constitute related (or prior) art.

### Summary of the Invention

It is an aspect of the present invention to provide a battery module that has high energy density and can suppress spread of fire to another battery module disposed above the battery module due to hot emissions discharged from the battery module, and an energy storage system including the same.

These and other aspects and features of the present disclosure will be described in or will be apparent from the following description of some embodiments of the present disclosure.

In accordance with one aspect of the present invention, a battery module includes: a plurality of battery cells each including a cell vent open in a second direction intersecting a first direction; and a module case receiving the plurality of battery cells therein and formed with a plurality of module vents each facing one of the plurality of cell vents.

The module case may include: a side plate formed with the plurality of module vents; and a vent guide guiding emissions discharged from the module case through the module vent.

The vent guide may include a bent tube redirecting the emissions from the module vent to be discharged in a direction intersecting the second direction.

The module case may further include: a filtration grid preventing foreign matter larger than a predetermined size from entering the module case through the module vent.

The number of module vents may correspond one-to-one to the number of cell vents.

At least some of the plurality of battery cells may be stacked in the first direction inside the module case.

A dimension of the battery cell in the first direction may be smaller than a dimension of the battery cell in the second direction and may be smaller than a dimension of the battery cell in a third direction intersecting the first direction and the second direction.

The plurality of battery cells may be arranged in pairs in the second direction inside the module case, and the cell vent of one of a pair of battery cells arranged in the second direction may face away from the cell vent of the other of the pair of battery cells.

In accordance with another aspect of the present invention, an energy storage system includes: a plurality of battery modules each comprising a plurality of battery cells and a module case receiving the plurality of battery cells therein, each of the battery cells comprising a cell vent open in a second direction intersecting a first direction, the module case being formed with a plurality of module vents facing one of the plurality of cell vents; and a rack supporting the plurality of battery modules.

The module case may include: a side plate formed with the plurality of module vents; and a vent guide guiding emissions discharged from the module case through the module vent.

The vent guide may include a bent tube redirecting the emissions from the module vent to be discharged in a direction intersecting the second direction.

The module case may further include: a filtration grid preventing foreign matter larger than a predetermined size from entering the module case through the module vent.

The number of module vents may correspond one-to-one to the number of cell vents.

At least some of the plurality of battery cells may be stacked in the first direction inside the module casing.

A dimension of the battery cell in the first direction may be smaller than a dimension of the battery cell in the second direction and may be smaller than a dimension of the battery cell in a third direction intersecting the first direction and the second direction.

The plurality of battery cells may be arranged in pairs in the second direction inside the module case, and the cell vent of one of a pair of battery cells arranged in the second direction may face away from the cell vent of the other of the pair of battery cells.

At least some of the plurality of the battery cells may be arranged in the third direction inside the module case.

The battery cell may be a rectangular battery cell including a plurality of cell terminals protruding from a side surface thereof formed with the cell vent.

The rack may include: an emission guide extending in the first direction and facing the plurality of module vents.

The rack may further include: a rack frame extending in the first direction; and a plurality of module supports secured to the rack frame and supporting the plurality of battery modules.

According to embodiments of the present invention, when an abnormality, such as fire, occurs inside a battery module, hot emissions are discharged through a module vent formed on a side plate of the battery module, whereby a battery module disposed above the battery module in which the abnormality has occurred can be prevented from being heated by the hot emissions. Accordingly, spread of fire in the energy storage system can be suppressed.

According to embodiments of the present invention, a plurality of battery cells is arranged in pairs inside a battery module such that a cell vent of one of a pair of battery cells faces away from a cell vent of the other of the pair of battery cells. Accordingly, energy density of the battery module can be improved.

According to embodiments of the present invention, it is possible to reduce a difference between the height of a battery module installed on each layer of a rack of the energy storage system and the height of each layer of the rack. Accordingly, energy density of the energy storage system can be improved.

However, the effects obtainable through the present disclosure are not limited to the above effects, and other technical effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### Brief Description of Drawings

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view of an energy storage system according to one embodiment of the present invention, wherein a rack of the energy storage system is shown in exploded form.
FIG. 2 is a perspective view of a battery module of the energy storage system of FIG. 1 according to a first embodiment of the present invention.
FIG. 3 is a perspective view of a plurality of battery cells received in a module case of FIG. 2.
FIG. 4 is a longitudinal sectional view of the battery module of FIG. 2 taken along IV-IV, wherein the battery module is shown as installed in the rack of FIG. 1.
FIG. 5 is an enlarged perspective view of a first modification of portion A of FIG. 2.
FIG. 6 is an enlarged perspective view of a second modification of portion A of FIG. 2.
FIG. 7 is a longitudinal sectional view of a battery module according to a second embodiment of the present invention, wherein the battery module is shown as installed in the rack of FIG. 1.
FIG. 8 is a longitudinal sectional view of a battery module according to a third embodiment of the present invention, wherein the battery module is shown as installed in the rack of FIG. 1.
FIG. 9 is a longitudinal sectional view of a battery module according to a fourth embodiment of the present invention, wherein the battery module is shown as installed in the rack of FIG. 1.
FIG. 10 is a longitudinal view sectional view of a battery module according to a fifth embodiment of the present invention.

### Detailed Description of the Invention

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

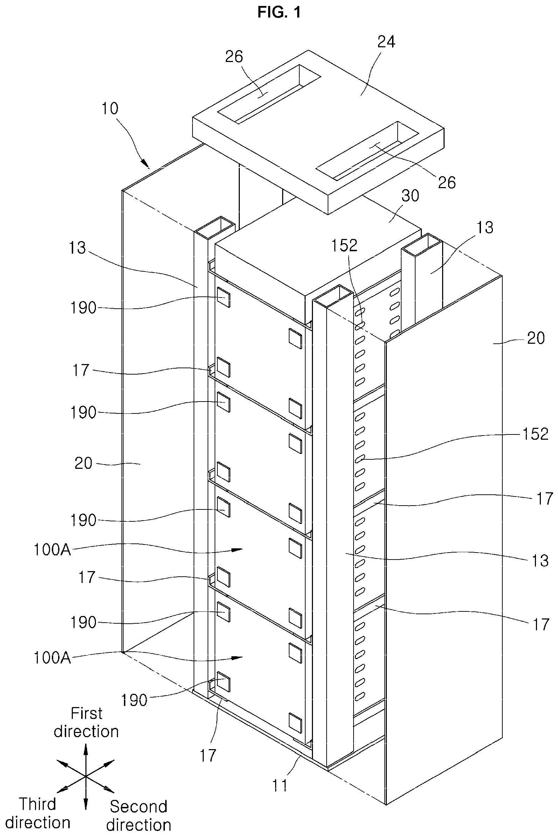

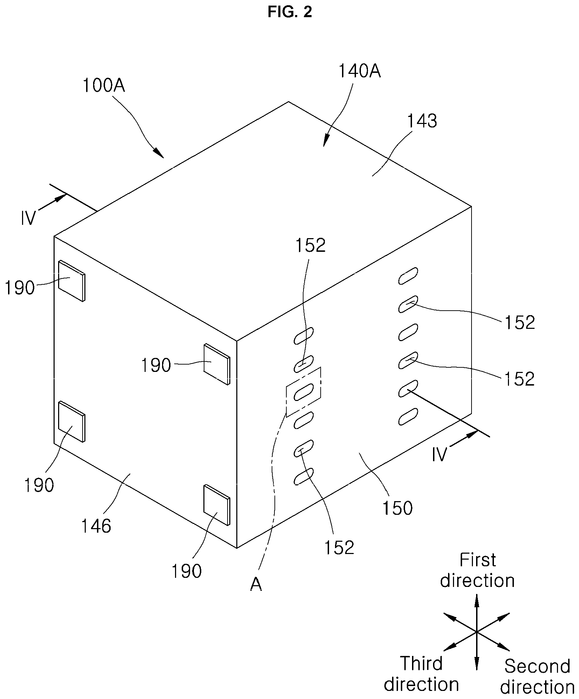

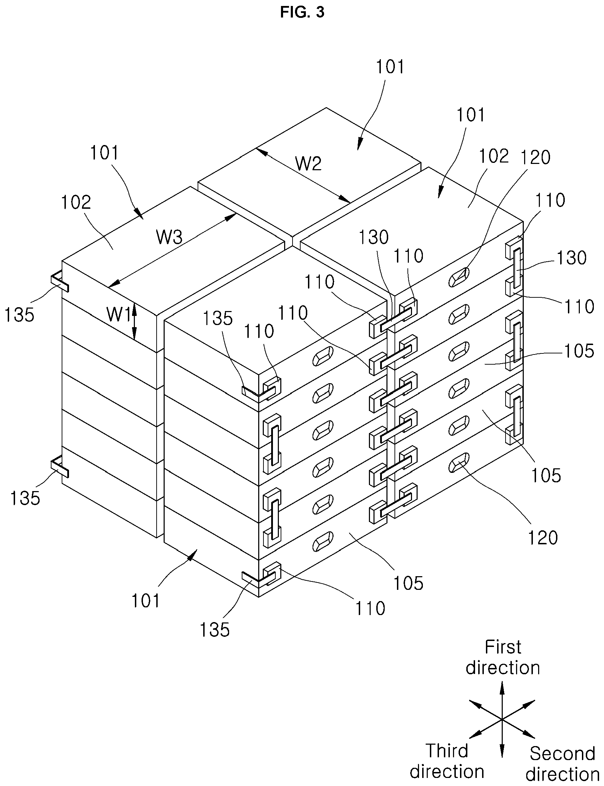

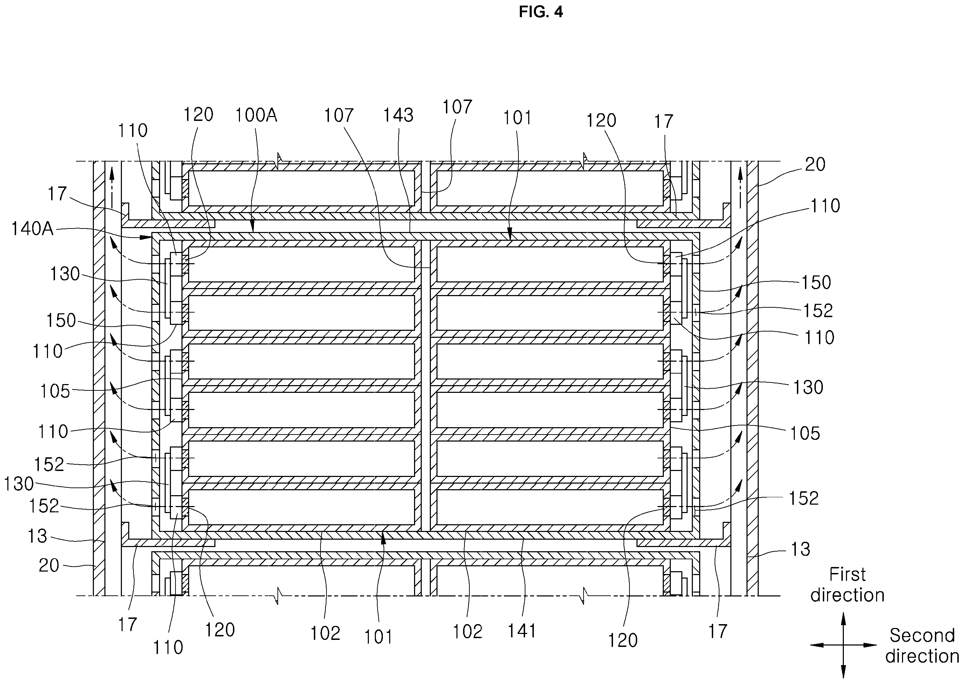

FIG. 1 is a perspective view of an energy storage system according to one embodiment of the present invention, wherein a rack of the energy storage system is shown in exploded form, FIG. 2 is a perspective view of a battery module of the energy storage system of FIG. 1 according to a first embodiment of the present invention, FIG. 3 is a perspective view of plurality of battery cells received in a module case of FIG. 2, and FIG. 4 is a longitudinal sectional view of the battery module of FIG. 2 taken along IV-IV, wherein the battery module is shown as installed in the rack of FIG. 1.

Referring to FIG. 1 to FIG. 4, the energy storage system according to one embodiment of the present invention includes a rack 10 and a plurality of battery modules 100A. The rack 10 supports the plurality of battery modules 100A. The rack 10 may include a plurality of rack frames 13, a plurality of module supports 17, a rack base 11, a rack cover 24, and a plurality of emission guides 20.

The plurality of rack frames 13 may be spaced apart from each other and may each extend (e.g., lengthwise) in a first direction. The rack frame 13 may include a pillar. For example, there may be provided four rack frames 13.

The plurality of module supports 17 may be secured to the rack frames 13 and may each support a corresponding one of the plurality of battery modules 100A. Some of the plurality of module supports 17 may be secured to a pair of rack frames 13 disposed at one side of the rack 10 in a second direction among the four rack frames 13. The other module supports 17 may be secured to a pair of rack frames 13 disposed at the other side of the rack 10 in the second direction among the four rack frames 13.

Each of the module supports 17 may extend in a third direction. Herein, the second direction is a direction orthogonal to the first direction, and the third direction is a direction orthogonal to the first direction and the second direction. For example, the first direction may be a vertical direction, the second direction may be a lateral direction, and the third direction may be a forward/rearward direction.

A pair of module supports 17 secured to the plurality of rack frames 13 and disposed opposite each other in the second direction may be flush with each other. Here, a distance between the pair of module supports 17 may be greater (e.g., slightly greater) than a dimension of the battery module 100A in the second direction. The pair of module supports 17 may support opposite ends of the battery module 100A in the second direction, respectively.

The plurality of module supports 17 may be arranged at regular intervals in the first direction. Accordingly, the rack may have a plurality of layers formed in the first direction. A distance between a pair of adjacent module supports 17 in the first direction may correspond to a height of each layer of the rack 10, for example, an inter-layer distance of the rack 10. The inter-layer distance of the rack 10 may be greater than a dimension (e.g., height) of the battery module 100A in the first direction.

A pair of module supports 17 corresponding to an uppermost layer of the rack 10 may support a battery control unit (BCU) 30 that controls charging and discharging of the plurality of battery modules 100A installed in the rack 10.

The rack base 11 may securely support lower ends of the plurality of rack frames 13. The rack cover 24 may be supported on upper ends of the plurality of rack frames 13 and may cover the BCU 30 and the plurality of battery modules 100A may be installed in the rack 10 to protect the BCU 30 and the plurality of battery modules 100A from foreign matter such as dust. The rack cover 24 may be formed with an open outlet 126 to allow emissions from the battery modules 100A, such as hot gases and flaming debris, to be discharged to the outside of the rack 10 without remaining inside the rack 10.

The emission guide 20 may be provided to the rack 10 to face side plates 150 of the plurality of battery modules 100A disposed on respective layers of the rack 10. The emission guide 20 may be supported on a pair of adjacent rack frames 13. The emission guide 20 may be a plate-like member extending in the first direction.

The emission guide 20 may include a pair of emission guides. One of the pair of emission guides 20 may be supported on a pair of front and rear rack frames 13 disposed on the right side among the four rack frames 13, and the other emission guide 20 may be supported on a pair of front and rear rack frames 13 disposed on the left side among the four rack frames 13.

A battery module 100A according to a first embodiment of the present invention may be installed in the rack 10. The battery module 100A may include a plurality of battery cells 101 and a module case 140A. Each battery cell 101 may include a cell case 102, a pair of cell terminals 110, a cell vent 120, and an electrode assembly (not shown).

The electrode assembly may be received in the cell case 102. The electrode assembly may be formed by winding or piling up a stack of a first electrode plate, a separator, and a second electrode plate each formed as a thin plate or film.

When the electrode assembly is a wound stack, a winding axis may be parallel to a longitudinal direction (y) of the cell case. However, the shape of the electrode assembly is not particularly restricted in the present invention and the electrode assembly may be a stack-type electrode assembly rather than a wound electrode assembly. Alternatively, the electrode assembly may be a Z-stack electrode assembly in which a positive electrode plate and a negative electrode plate are inserted into opposite sides of a separator bent in a "Z" shape. In addition, one or more electrode assemblies stacked one above another with long sides thereof adjoining each other may be received in the cell case. However, the number of electrode assemblies is not particularly restricted in the present invention. A first electrode plate of the electrode assembly may serve as a negative electrode and a second electrode plate of the electrode assembly may serve as a positive electrode. Of course, the reverse is also possible.

The first electrode plate may be formed by applying a first electrode active material, such as graphite or carbon, to a first electrode collector plate formed of a metal foil, such as copper, a copper alloy, nickel, or a nickel alloy, and may include a first electrode tab (or a first uncoated portion), which is a region not coated with the first electrode active material. The first electrode tab may provide a path for the flow of electric current between the first electrode plate and a first current collector. In some embodiments, the first electrode tab may be formed by cutting the first electrode plate in advance during manufacture of the first electrode plate such that a portion of the first electrode plate protrudes from one side of the electrode assembly beyond the separator without additional cutting.

The second electrode plate may be formed by applying a second electrode active material, such as a transition metal oxide, to a second electrode collector plate formed of a metal foil, such as aluminum or an aluminum alloy, and may include a second electrode tab (or second uncoated portion), which is a region not coated with the second electrode active material. The second electrode tab may provide a path for the flow of electric current between the second electrode plate and a second collector. In some embodiments, the second electrode tab may be formed by cutting the second electrode plate in advance during manufacture of the second electrode plate such that a portion of the second electrode plate protrudes from the other side of the electrode assembly beyond the separator without additional cutting.

In some embodiments, the first electrode tab may be disposed at the left side of the electrode assembly and the second electrode tab may be disposed at the right side thereof. Alternatively, the first electrode tab and the second electrode tab may be disposed at the same side of the electrode assembly. Here, the terms "left" and "right" are for convenience of description only, and positions of the first electrode tab and the second electrode tab can be changed when the battery cell 101 is rotated horizontally or vertically.

The first electrode tab of the first electrode plate and the second electrode tab of the second electrode plate may be disposed at opposite ends of the electrode assembly described above, respectively. In some embodiments, the electrode assembly may be received in the cell case along with an electrolyte. In addition, the electrode assembly may include the first current collector and the second current collector welded and connected to the first electrode tab of the first electrode plate and the second electrode tab of the second electrode plate exposed at opposite sides of the electrode assembly, respectively.

The cell case 102 may have a generally cuboidal or hexahedral shape and may receive the electrode assembly and the electrolyte therein. The cell case 102 may include a metal can open at one side thereof and a cap plate closing the open side of the metal can. The pair of cell terminals 110 may be disposed on the cap plate to protrude outwardly of the cap plate.

One of the pair of cell terminals 110 may be electrically connected to one of the first current collector and the second current collector, and the other cell terminal 110 may be electrically connected to the other current collector. Accordingly, one of the pair of cell terminals 110 may serve as a positive terminal and the other terminal 110 may serve as a negative terminal.

The pair of cell terminals 110 may be disposed at opposite ends of the cap plate in a longitudinal direction thereof, and the cell vent 120 may be disposed between the pair of cell terminals 110 on the cap plate. The cell vent 120 may rupture or boost upon generation of hot gases and flaming debris inside the cell case 102 due to, for example, overcharging, abnormal operation, or the like, to allow emissions including the hot gases, the flaming debris, and the like to be discharged from the cell case 102 therethrough.

The battery cell 101 may be a rectangular or hexahedral battery cell including the pair of cell terminals 110 protruding from a side surface 105 thereof formed with the cell vent 120. Since the pair of cell terminals 110 may protrude from a side surface 105 of the cap plate, as described above, the outer surface of the cap plate may be referred to as a terminal-side surface.

Each battery cell 101 may be disposed inside the module case 140A such that the cell vent 120 thereof is open or openable in the second direction. The plurality of battery cells 101 may be stacked in a lying down position inside the module case 140A. Accordingly, a dimension W1 of the battery cell 101 in the first direction may be smaller than a dimension W2 of the battery cell 101 in the second direction and smaller than a dimension W3 of the battery cell 101 in the third direction.

Referring to FIG. 3, the plurality of battery cells 101 may be stacked in the first direction, may be arranged in pairs in the second direction, and may also be arranged in pairs in the third direction inside the module case 140A. That is, the plurality of battery cells 101 may be arranged generally in the form of a block to form a three-dimensional matrix.

The cell vent 120 of one of a pair of battery cells 101 arranged in the second direction may face away from (e.g., in an opposite direction relative to) the cell vent 120 of the other of the pair of battery cells 101. Accordingly, respective surfaces of the pair of battery cells 101 arranged in the second direction, which are opposite the respective terminal-side surfaces 105 of the pair of battery cells, may face each other.

The module case 140A may have a generally cuboidal shape to receive the plurality of battery cells 101 therein. The module case 140A may include a bottom plate 141, a top plate 143, a front plate 146, a back plate (not shown), and a pair of side plates 150. The top plate 143 may be disposed above the bottom plate 141 in the first direction. With the battery module 100A installed in the rack 10, the bottom plate 141 may be supported at both lateral ends thereof on a pair of module supports 17.

The back plate may be disposed behind the front plate 146 in the third direction. The pair of side plates 150 may be spaced apart from each other in the second direction. The bottom plate 141, the top plate 143, the front plate 146, the back plate (not shown), and the pair of side plates 150 may be manufactured separately from respective adjacent plates to be assembled therewith, or may be manufactured integrally with respective adjacent plates.

The battery module 100A may further include a plurality of module terminals 190, a plurality of inter-cell busbars 130, and a plurality of cell-to-module busbars 135. The plurality of module terminals 190 may be disposed on the front plate 146 and may pass through the front plate 146 in a thickness direction thereof.

The inter-cell busbar 130 may electrically connect one cell terminal 110 of one of a pair of adjacent battery cells 101 inside the module case 140A to one cell terminal of the other of the pair of adjacent battery cells 101. The cell-to-module busbar 135 may electrically connect one cell terminal 110 of one of the plurality of battery cells 101 to one of the plurality of module terminals 190.

The cell-to-module busbar 135 may have one side bonded to one cell terminal 110 and the other side bonded to an inner surface of one module terminal 190, which is exposed inside the module case 140A through an inner surface of the front plate 146. The cell-to-module busbar 135 may be bent in an "L" shape inside the module case 140A.

One of the module terminals 190 of one battery module 100A may be electrically connected to one of the module terminals 190 of another battery module 100A adjacent to the one battery module 100A in the first direction via an inter-module busbar (not shown). Alternatively, one of the plurality of module terminals 190 of one battery module 100A may be electrically connected to one of a plurality of module terminals (not shown) of the BCU 30 via an inter-module busbar (not shown).

Although the plurality of battery cells 101 is shown as forming a three-dimensional matrix in which six battery cells are arranged in the first direction, two battery cells are arranged in the second direction, and two battery cells are arranged in the third direction in FIG. 3, this is merely illustrative and the number of battery cells 101 arranged in the first direction and the number of battery cells 101 arranged in the third direction may be different than shown in FIG. 3.

The module case 140A may be formed with a plurality of module vents 152, each facing or aligned with one of the plurality of cell vents 120 corresponding in number to the battery cells 101 (e.g., each module vent 152 may face one cell vent 120 and each cell vent 120 may face one module vent 152). The number of module vents 152 may correspond one-to-one to the number of cell vents 120. The plurality of module vents 152 may be formed on the pair of side plates 150 of the module case 140A. Each module vent 152 may be a through-hole formed through the side plate 150 in a thickness direction thereof.

As can be seen from FIG. 4, if an abnormality, such as overheating or fire, occurs in one of the plurality of battery cells 101 inside the module case 140A, hot emissions, such as hot gases or flaming debris, can be discharged from the cell vent 120 of the corresponding battery cell 101. In FIG. 4, the route of discharge of the emissions is indicated by the dash-dotted arrows.

The hot emissions discharged from the cell vent 120 may be discharged to the outside of the module case 140A through the module vent 152 facing the cell vent 120 without spreading inside the module case 140A.

The hot emissions discharged in the second direction from the side plate 150 of the module case 140A may be guided by the emission guide 20 (facing the side plate 150) to move in a longitudinal direction of the emission guide 20. Since the hot emissions are less dense than air at room temperature, the hot emissions can move upwards along the emission guide 20. The hot emissions having moved upwards may be discharged to the outside of the rack 10 through the outlet 26 of the rack cover 24.

Since the hot emissions may be discharged from the side plate 150 of the module case 140A and move upwards along the emission guide 20 disposed on the right or left side of the module support 17, another battery module 100A in the rack 10 (e.g., disposed above the battery module 100A) in which the abnormality has occurred can be prevented from being heated by the hot emissions. Accordingly, spread of fire in the energy storage system can be inhibited.

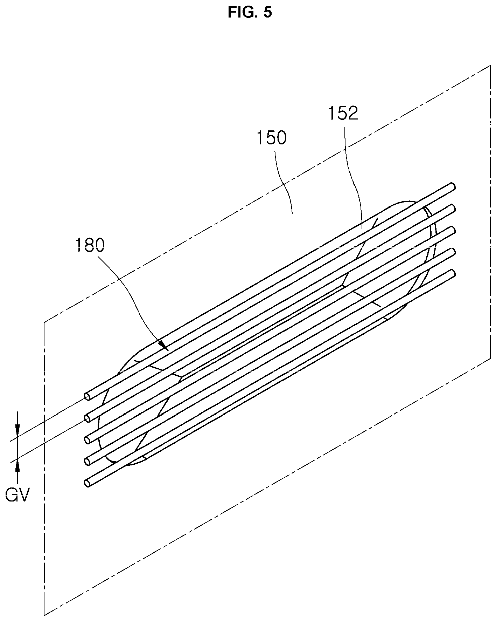

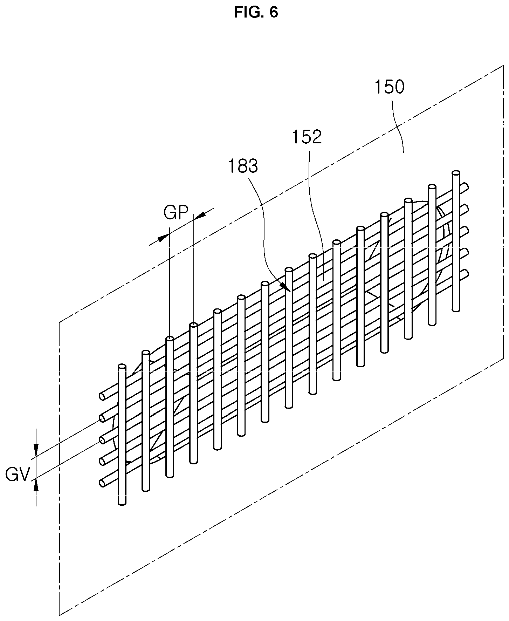

FIG. 5 is an enlarged perspective view of a first modification of portion A of FIG. 2, and FIG. 6 is an enlarged perspective view of a second modification of portion A of FIG. 2. Referring to FIG. 3 to FIG. 5, the module case 140A may further include a filtration grid 180 according to the first modification, wherein the filtration grid 180 is disposed on the side plate 150 to overlap or cover the module vent 152.

The filtration grid 180 may include a plurality of third directional wires extending in the third direction and spaced apart from each other in the first direction. Both longitudinal ends of the third directional wire may be joined to the side plate 150 by welding or the like. A pair of adjacent third directional wires may be arranged with a predetermined vertical gap GV therebetween.

Among the hot emissions discharged from the module vent 152 of the battery module 100A, some emissions, such as flaming debris, can be denser than air at room temperature. Accordingly, upon encountering the emission guide 20, such emissions can rebound from the emission guide 20 to be directed toward another module vent 152 of the battery module 100A or toward the module vent 152 of another battery module 100A other than the battery module 100A in which the abnormality has occurred.

The filtration grid 180 may prevent hot emissions (having a size greater than the vertical gap GV) from entering the module case 140A through the module vent 152. In this way, it is possible to prevent hot emissions generated in one battery cell 101 from propagating to another battery cell 101 or another battery module 100A and causing spread of fire.

Referring to FIG. 3, FIG. 4, and FIG. 6, the module case 140A may further include a filtration grid 183 according to the second modification, wherein the filtration grid 183 may be disposed on the side plate 150 to overlap the module vent 152. The filtration grid 183 may include a plurality of third directional wires extending in the third direction and spaced apart from each other in the first direction and a plurality of first directional wires extending in the first direction to be orthogonal to the third directional wires and spaced apart from each other in the third direction.

Both longitudinal ends of the third directional wire and both longitudinal ends of the first directional wire may be joined to the side plate 150 by welding or the like. A pair of adjacent third directional wires may be arranged with a predetermined vertical gap GV therebetween, and a pair of adjacent first directional wires may be arranged with a predetermined horizontal gap GP therebetween.

The filtration grid 183 may prevent hot emissions having a size greater than the vertical gap GV and/or the horizontal gap GP from entering the module case 140A through the module vent 152. In this way, it is possible to prevent hot emissions generated in one battery cell 101 from propagating to another battery cell 101 or another battery module 100A and causing spread of fire. The filtration grid 183 of FIG. 6 can further reduce the possibility of hot emissions entering the module case 140A through the module vent 152 than the filtration grid 180 of FIG. 5.

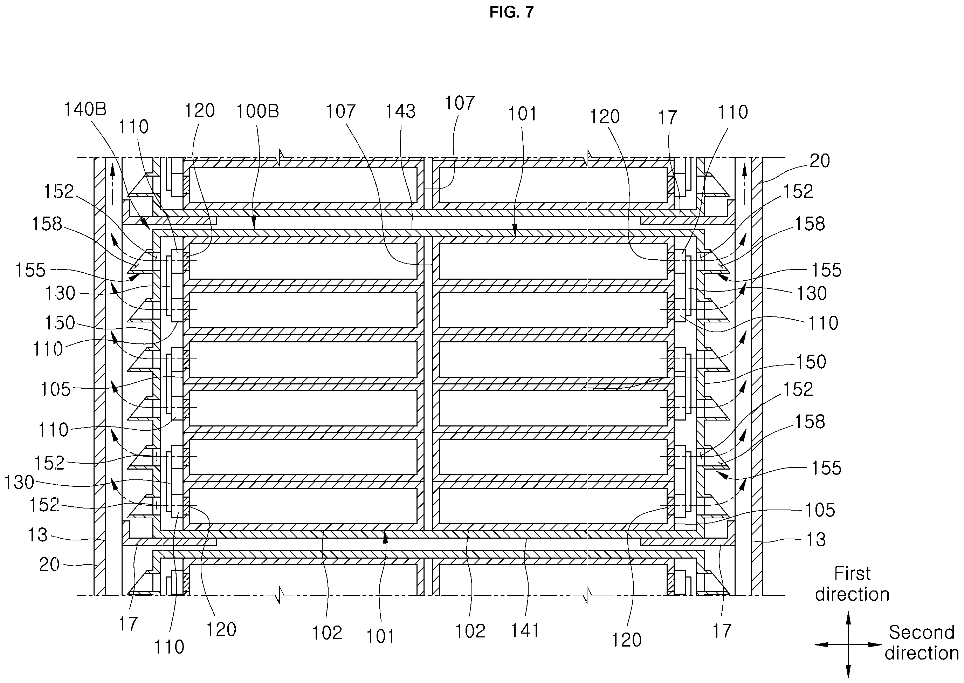

FIG. 7 is a longitudinal sectional view of a battery module according to a second embodiment of the present invention, wherein the battery module is shown as installed in the rack of FIG. 1. Referring to FIG. 7, the battery module 100B according to the second embodiment may further include a plurality of battery cells 101, a module case 140B receiving the plurality of battery cells 101 therein, a plurality of module terminals 190 (see FIG. 2), a plurality of inter-cell busbars 130, and a plurality of cell-to-module busbars 135 (see FIG. 3), like the battery module 100A according to the first embodiment.

Since the plurality of battery cells 101, the plurality of module terminals 190, the plurality of inter-cell busbars 130, and the plurality of cell-to-module busbars 135 included in the battery module 100B according to the second embodiment are the same as those of the battery module 100A according to the first embodiment, repeated description thereof will be omitted.

The module case 140B may include a bottom plate 141, a top plate 143, a front plate 146 (see FIG. 2), a back plate (not shown), a pair of side plates 150, and a vent guide 155. Since the bottom plate 141, the top plate 143, the front plate 146, the back plate, and the pair of side plates 150 are the same as those of the module case 140A of the battery module 100A according to the first embodiment, repeated description thereof will be omitted.

The vent guide 155 may guide emissions discharged from the module case 140B through a module vent 152 of the module case 140B. The vent guide 155 may be provided in a number equal to the number of module vents 152 to be associated one-to-one with the module vents 152.

The vent guide 155 may include a tube extending straight from the side plate 150 in the second direction. A distal end of the vent guide 155 may be beveled, like a tip of a syringe needle. Accordingly, an opening 158 at the distal end of the vent guide 155 may be inclined to be open upwards.

With this structure, the opening 158 at the tip of the vent guide 155 may have a greater cross-sectional area than the module vent 152, whereby smooth discharge of emissions from the module case 140B may be achieved and substances having a greater specific gravity than gases among the emissions can be guided closer to the emission guide 20 than the gases.

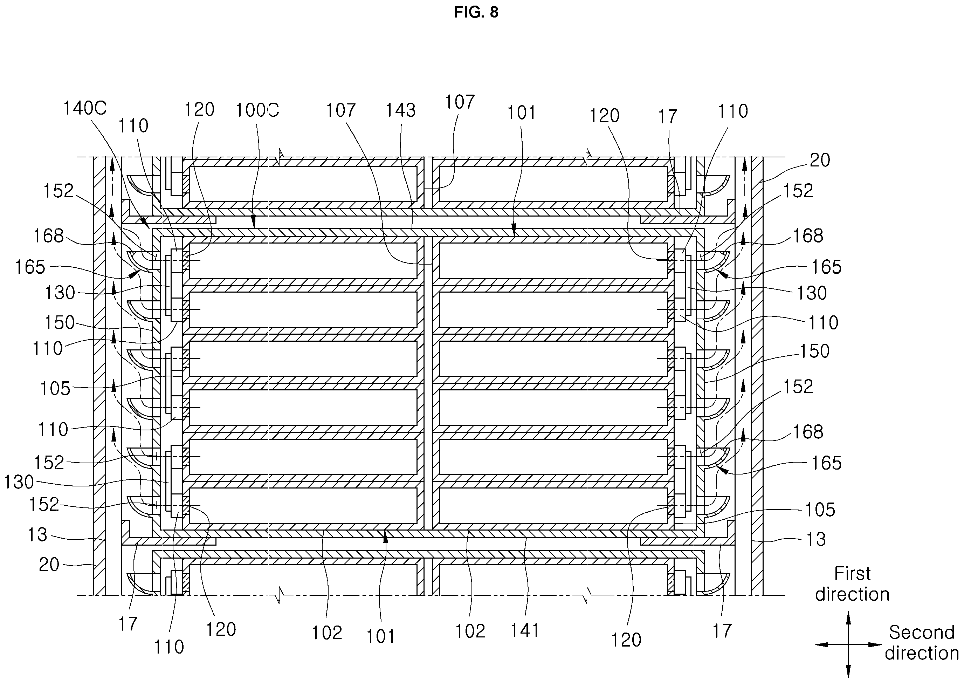

FIG. 8 is a longitudinal sectional view of a battery module according to a third embodiment of the present invention, wherein the battery module is shown as installed in the rack of FIG. 1. Referring to FIG. 8, the battery module 100C according to the third embodiment may further include a plurality of battery cells 101, a module case 140C receiving the plurality of battery cells 101 therein, a plurality of module terminals 190 (see FIG. 2), a plurality of inter-cell busbars 130, and a plurality of cell-to-module busbars 135 (see FIG. 3), like the battery module 100A according to the first embodiment.

Since the plurality of battery cells 101, the plurality of module terminals 190, the plurality of inter-cell busbars 130, and the plurality of cell-to-module busbars 135 included in the battery module 100C according to the third embodiment are the same as those of the battery module 100A according to the first embodiment, repeated description of thereof will be omitted.

The module case 140C includes a bottom plate 141, a top plate 143, a front plate 146 (see FIG. 2), a back plate (not shown), a pair of side plates 150, and a vent guide 165. Since the bottom plate 141, the top plate 143, the front plate 146, the back plate, and the pair of side plates 150 are the same as those of the module case 140A of the battery module 100A according to the first embodiment, repeated description of thereof will be omitted.

The vent guide 165 may guide emissions discharged from the module case 140C through a module vent 152 of the module case 140C. The vent guide 155 may be provided in a number equal to the number of module vents 152 to be associated one-to-one with the module vents 152.

The vent guide 165 may include a channel that redirects emissions from the module vent 152 to be discharged in an upward direction parallel to the first direction. The channel may be a quarter-spherical member protruding from a lower portion of the module vent 152 of the side plate 150. An opening 168 at a distal end of the vent guide 165 may have a semicircular shape in plan view and may be open upwards.

In FIG. 8, a discharge route of emissions is indicated by dash-dotted arrows. Emissions discharged from the module vent 152, redirected along a corresponding vent guide 165, and having been discharged upwards through the opening 168 at the tip of the corresponding vent guide 165 may be directed to the emission guide 20 while bypassing another vent guide 165 disposed above the corresponding vent guide 165 and may move upwards along the emission guide 20.

Since the opening 168 at the distal end of the vent guide 165 may be open upwards, it is highly unlikely that emissions having high specific gravity will rebound from the emission guide 20 and enter the module case 140C through the opening 168 at the distal end of the vent guide 165 and the module vent 152. Accordingly, it is possible to prevent hot emissions generated in one battery cell 101 from propagating to another battery cell 101 or another battery module 100C and causing spread of fire.

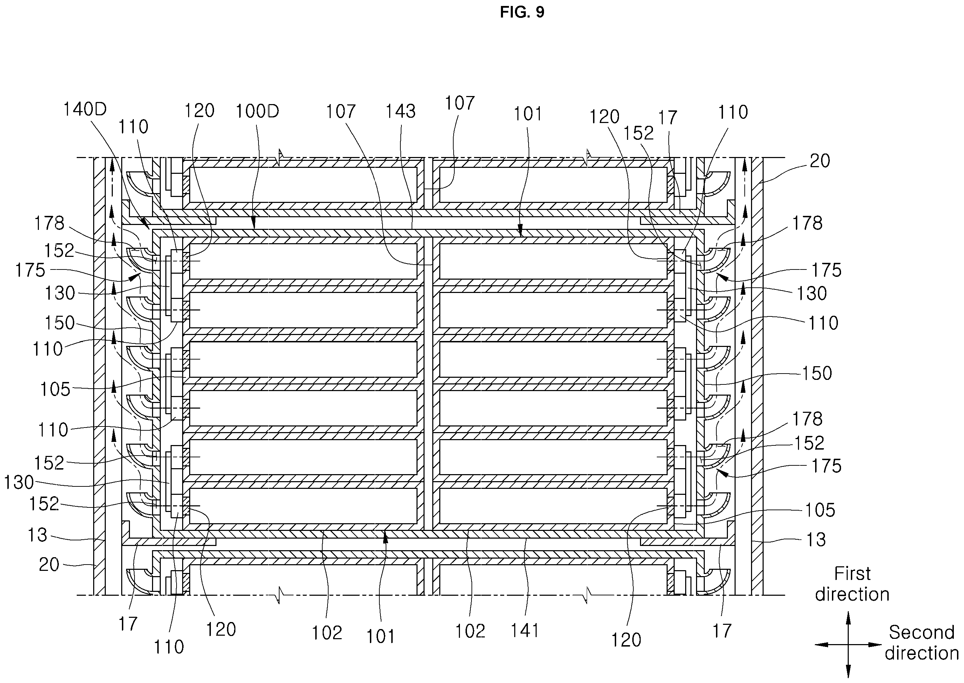

FIG. 9 is a longitudinal sectional view of a battery module according to a fourth embodiment of the present invention, wherein the battery module is shown as installed in the rack of FIG. 1. Referring to FIG. 9, the battery module 100D according to the fourth embodiment may further include a plurality of battery cells 101, a module case 140D receiving the plurality of battery cells 101 therein, a plurality of module terminals 190 (see FIG. 2), a plurality of inter-cell busbars 130, and a plurality of cell-to-module busbars 135 (see FIG. 3), like the battery module 100A according to the first embodiment.

Since the plurality of battery cells 101, the plurality of module terminals 190, the plurality of inter-cell busbars 130, and the plurality of cell-to-module busbars 135 included in the battery module 100D according to the fourth embodiment are the same as those of the battery module 100A according to the first embodiment, repeated description thereof will be omitted.

The module case 140D may include a bottom plate 141, a top plate 143, a front plate 146 (see FIG. 2), a back plate (not shown), a pair of side plates 150, and a vent guide 175. Since the bottom plate 141, the top plate 143, the front plate 146, the back plate, and the pair of side plates 150 are the same as those of the module case 140A of the battery module 100A according to the first embodiment, repeated description thereof will be omitted.

The vent guide 175 may guide emissions discharged from the module case 140D through a module vent 152 of the module case 140D. The vent guide 155 may be provided in a number equal to the number of module vents 152 to be associated one-to-one with the module vents 152.

The vent guide 175 may include a bent tube redirecting emissions from the module vent 152 to be discharged in a direction intersecting the second direction. The bent tube may guide the emissions from the module vent 152 in an upward direction parallel to the first direction. The bent tube may have a similar shape to an elbow pipe fitting.

An opening 178 at a distal end of the vent guide 175 may have the same shape as the module vent 152 in plan view. The opening 178 at the distal end of the vent guide 175 may be open in the first direction.

In FIG. 9, the route of discharge of emissions is indicated by the dash-dotted arrows. Emissions discharged from the module vent 152, redirected along a corresponding vent guide 175, and having been discharged upwards through the opening 178 at the distal end of the corresponding vent guide 175 may be directed to the emission guide 20 while passing by another vent guide 175 disposed above the corresponding vent guide 175 and may move upwards along the emission guide 20.

Since the opening 178 at the distal end of the vent guide 175 may open upwards, it is highly unlikely that emissions having high specific gravity will rebound from the emission guide 20 and enter the module case 140D through the opening 178 at the distal end of the vent guide 175 and the module vent 152. Accordingly, it is possible to prevent hot emissions generated in one battery cell 101 from propagating to another battery cell 101 or another battery module 100D and causing spread of fire.

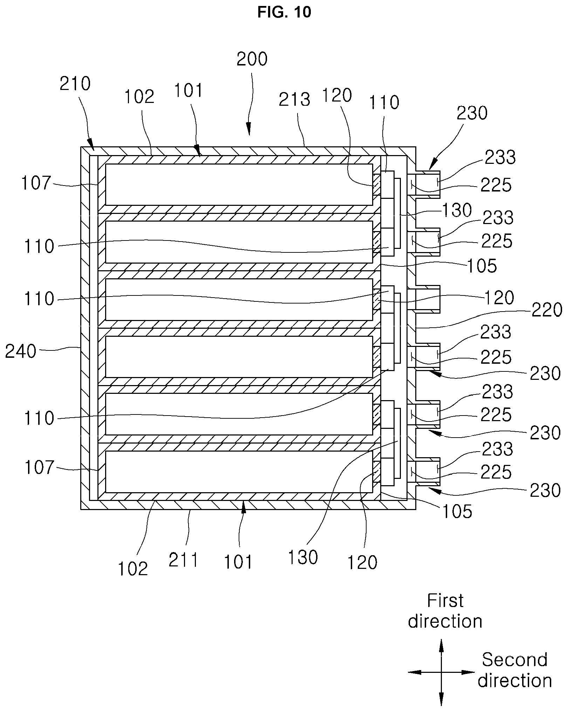

FIG. 10 is a longitudinal sectional view of a battery module according to a fifth embodiment of the present invention. Referring to FIG. 10, the battery module 200 according to the fifth embodiment may further include a plurality of battery cells 101, a module case 210 receiving the plurality of battery cells 101 therein, a plurality of module terminals 190 (see FIG. 2), a plurality of inter-cell busbars 130, and a plurality of cell-to-module busbars 135 (see FIG. 3), like the battery module 100A according to the first embodiment.

Since the plurality of battery cells 101, the plurality of module terminals 190, the plurality of inter-cell busbars 130, and the plurality of cell-to-module busbars 135 included in the battery module 200 according to the fifth embodiment are the same as those of the battery module 100A according to the first embodiment, repeated description thereof will be omitted.

However, in this embodiment, the plurality of battery cells 101 of the battery module 200 may form a three-dimensional matrix in which a plurality of battery cells 101 is stacked in the first direction, a plurality of battery cells 101 may be arranged in the second direction, and one battery cell 101 may be disposed in the second direction.

Each battery cell 101 may be disposed inside the module case 210 such that the cell vent 120 thereof is open in the second direction. The battery cells 101 may be stacked in a lying down position inside the module case 210.

The module case 210 may have a generally cuboidal shape to receive the plurality of battery cells 101 therein. The module case 210 may include a bottom plate 211, a top plate 213, a front plate (not shown), a back plate (not shown), a first side plate 220, and a second side plate 240. The top plate 213 may be disposed above the bottom plate 211 in the first direction.

The back plate may be disposed behind the front plate in the third direction. The first side plate 220 and the second side plate 240 may be spaced apart from each other in the second direction. The first side plate 220 may be formed with a plurality of module vents 225 each facing one of the plurality of cell vents 120 corresponding in number to the plurality of battery cells 101. The module vent 225 may be a through-hole formed through the side plate 220 in a thickness direction thereof. The number of module vents 225 may correspond one-to-one to the number of cell vents 120.

The first side plate 220 may face a terminal-side surface 105 of the battery cell 101. The second side plate 240 may face a side surface 107 of the battery cell 101 opposite the terminal-side surface 105. The second side plate 240 may have no module vents 225. The module case 210 may further include a vent guide 230 guiding emissions discharged from the module case 210 through the module vent 225.

The vent guide 230 may be provided in a number equal to the number of module vents 225 to be associated one-to-one with the module vents 225. The vent guide 230 may include a tube extending straight from the first side plate 220 in the second direction. An opening 233 at a distal end of the vent guide 230 may be open towards the emission guide 20 (see FIG. 1).

Hot emissions discharged from the cell vent 120 may be discharged to the outside of the module case 210 through the module vent 225 facing the cell vent 120 and the opening 233 at the distal end of the vent guide 230 without spreading inside the module case 210 and may move in an upward direction parallel to the first direction along the emission guide 20.

Although the present invention has been described with reference to embodiments and drawings illustrating aspects thereof, the present invention is not limited thereto. Various modifications and variations can be made by a person skilled in the art to which the present invention belongs within the technical scope of the present invention as defined by the appended claims and equivalents thereto.

## Claims

1. A battery module (100A, 100B, 100C, 100D, 200) comprising:
a plurality of battery cells (101) each comprising a cell vent (120) open in a second direction intersecting a first direction; and
a module case (140A, 140B, 140C, 140D, 210) receiving the plurality of battery cells (101) therein and formed with a plurality of module vents (152, 225) each facing one of the plurality of cell vents (120).

2. The battery module (100A, 100B, 100C, 100D, 200) according to claim 1, wherein the module case (140A, 140B, 140C, 140D, 210) comprises:
a side plate (150) formed with the plurality of module vents (152, 225); and
a vent guide (155, 165, 175, 230) configured to guide emissions discharged from the module case (140A, 140B, 140C, 140D, 210) through the plurality of module vents (152, 225).

3. The battery module (100A, 100B, 100C, 100D, 200) according to claim 2, wherein the vent guide (155, 165, 175, 230) comprises a bent tube configured to redirect the emissions from the module vent (152, 225) to be discharged in a direction intersecting the second direction.

4. The battery module (100A, 100B, 100C, 100D, 200) according to any one of the preceding claims, wherein the module case (140A, 140B, 140C, 140D, 210) further comprises:
a filtration grid (180, 183) configured to prevent foreign matter larger than a predetermined size from entering the module case (140A, 140B, 140C, 140D, 210) through the plurality of module vents (152, 225).

5. The battery module (100A, 100B, 100C, 100D, 200) according to any one of the preceding claims, wherein a number of module vents (152, 225) corresponds one-to-one to a number of cell vents (120).

6. The battery module (100A, 100B, 100C, 100D, 200) according to any one of the preceding claims, wherein at least some of the plurality of battery cells (101) are stacked in the first direction inside the module case (140A, 140B, 140C, 140D, 210).

7. The battery module (100A, 100B, 100C, 100D, 200) according to any one of the preceding claims, wherein the plurality of battery cells (101) is arranged in pairs in the second direction inside the module case (140A, 140B, 140C, 140D, 210), and the cell vent (120) of one of a pair of battery cells (101) arranged in the second direction faces away from the cell vent (120) of the other of the pair of battery cells (101).

8. An energy storage system comprising:
a plurality of battery modules (100A, 100B, 100C, 100D, 200) each comprising a plurality of battery cells (101) and a module case (140A, 140B, 140C, 140D, 210) receiving the plurality of battery cells (101) therein, each of the battery cells (101) comprising a cell vent (120) open in a second direction intersecting a first direction, the module case (140A, 140B, 140C, 140D, 210) being formed with a plurality of module vents (152, 225) facing one of the plurality of cell vents (120); and
a rack (10) supporting the plurality of battery modules (100A, 100B, 100C, 100D, 200).

9. The energy storage system according to claim 8, wherein the module case (140A, 140B, 140C, 140D, 210) comprises:
a side plate (150) formed with the plurality of module vents (152, 225); and
a vent guide (155, 165, 175, 230) configured to guide emissions discharged from the module case (140A, 140B, 140C, 140D, 210) through the plurality of module vents (152, 225).

10. The energy storage system according to claim 8 or 9, wherein the module case (140A, 140B, 140C, 140D, 210) further comprises a filtration grid (180, 183) configured to prevent foreign matter larger than a predetermined size from entering the module case (140A, 140B, 140C, 140D, 210) through the module vent (152, 225).

11. The energy storage system according to any one of claims 8 to 10, wherein at least some of the plurality of battery cells (101) are stacked in the first direction inside the module casing.

12. The energy storage system according to any one of claims 8 to 11, wherein the plurality of battery cells (101) is arranged in pairs in the second direction inside the module case (140A, 140B, 140C, 140D, 210), and the cell vent (120) of one of a pair of battery cells (101) arranged in the second direction faces away from the cell vent (120) of the other of the pair of battery cells (101).

13. The energy storage system according to any one of claims 8 to 12, wherein at least some of the plurality of the battery cells (101) are arranged in a third direction inside the module case (140A, 140B, 140C, 140D, 210), the third direction intersecting the first direction and the second direction.

14. The energy storage system according to any one of claims 8 to 13, wherein the rack (10) comprises an emission guide (20) extending in the first direction and facing the plurality of module vents (152, 225).

15. The energy storage system according to any one of claims 8 to 14, wherein the rack (10) further comprises:
a rack frame (13) extending in the first direction; and
a plurality of module supports (17) secured to the rack frame (13) and supporting the plurality of battery modules (100A, 100B, 100C, 100D, 200).
